# EUROPÄISCHE PATENTSCHRIFT

(11) **EP 2 700 611 B1**
(45) Veröffentlichungstag und Bekanntmachung des Hinweises auf die Patenterteilung: **11.10.2017**
(21) Anmeldenummer: 13178955.4
(22) Anmeldetag: 01.08.2013
(51) Int. Cl.: B66F 9/075, B60K 1/04, H01M 2/10, H01M 10/0525, H01M 10/42, H01M 10/48, H01M 12/08

(54) **Adapterrahmen für Traktionsbatterie sowie Flurförderzeug mit Traktionsbatterie**
Adapter framework for traction battery and industrial truck with traction battery
Cadre d'adaptateur pour batterie de traction et chariot de manutention avec batterie de traction

(30) Priorität: 21.08.2012 DE 102012107670
(43) Veröffentlichungstag der Anmeldung: 26.02.2014
(73) Patentinhaber: STILL GmbH, 22113 Hamburg (DE)
(72) Erfinder: Gütschow, Raphaela, 22041 Hamburg (DE); Tödter, Dr., Joachim, 22391 Hamburg (DE)
(74) Vertreter: Patentship Patentanwaltsgesellschaft mbH

(56) Entgegenhaltungen:
- EP-A1- 0 662 725
- EP-A1- 2 261 167
- EP-A1- 2 650 251
- EP-A2- 0 620 604
- DE-A1-102005 053 305
- JP-U- S6 352 258
- US-A1- 2008 011 553

## Beschreibung

Die Erfindung betrifft einen Adapterrahmen zur Bildung einer elektrischen Traktionsbatterie eines Flurförderzeugs aus mindestens zwei Modulbatterien, wobei die Modulbatterien in den Adapterrahmen eingesetzt werden können und der Adapterrahmen in einem Batteriefach eines Flurförderzeugs angeordnet werden kann. Weiterhin betrifft die Erfindung ein Flurförderzeug mit einer elektrischen Traktionsbatterie die aus mindestens zwei Modulbatterien gebildet ist, wobei die Modulbatterien in einem Batteriefach des Flurförderzeugs angeordnet sind, das Batteriefach zwischen einer Vorderachse und einer Hinterachse des Flurförderzeugs angeordnet ist sowie für einen seitlichen, horizontalen Batteriewechsel über eine seitliche Batteriefachöffnung vorgesehen ist, und sämtliche Modulbatterien über die Batteriefachöffnung eingesetzt oder entnommen werden können.

Bei batterie-elektrisch betriebenen Flurförderzeugen werden überwiegend noch Traktionsbatterie auf Blei-Säurebasis eingesetzt. Eine solche Traktionsbatterie besteht üblicherweise aus quaderförmig geformten Einzelzellen mit einer Nennspannung von jeweils 2V, die in einem Batterietrog zusammengefasst sind und mit dem Batterietrog zusammen in ein Batteriefach des Flurförderzeugs eingesetzt werden. Die Anzahl der in Reihe verbundenen Einzelzellen bestimmt dabei die Nennspannung der gesamten Traktionsbatterie. Abhängig von der Art des Einsatzes des Flurförderzeugs verbleibt die Traktionsbatterie in dem Batteriefach des Flurförderzeugs, wenn diese wieder aufgeladen wird, oder es erfolgt alternativ ein Wechsel gegen eine geladene Traktionsbatterie, wenn die Traktionsbatterie entladen ist. In dem letzteren Fall wird die entleerte Traktionsbatterie dann außerhalb des Flurförderzeugs wieder aufgeladen, beispielsweise an einer eigens hierzu eingerichteten Batteriewechsel- und Ladestationen innerhalb eines Betriebsgeländes.

Nachteilig an diesem Stand der Technik ist, dass der Wechsel der Traktionsbatterie mit hohen Aufwand verbunden ist, da diese sehr groß und schwer sind und folglich in der Regel nur mit speziellen Hebewerkzeugen und Vorrichtungen aus dem Batteriefach entnommen und in das Batteriefach des Flurförderzeugs eingesetzt werden können. Bleibatterien sind nur bedingt zwischenladefähig und in Ihrer Energiedichte sowie Leistungsdichte begrenzt. Auch sind Bleibatterien nicht servicefrei und haben eine begrenzte Lebensdauer von nur etwa 1200 Vollentladezyklen, die durch häufiges Zwischenladen zusätzlich verringert wird.

Von besonderem Interesse sind daher alternative Batterien auf Basis anderer chemischer Reaktionen und unter diesen beispielsweise Lithium-Batterien. Unter diesen nicht-Bleibatterien modernerer Technik sind insbesondere die Li-lonen-Batterien von Interesse, die die zuvor genannten Nachteile nicht besitzen.

Bekannt ist aus dem Stand der Technik, beispielsweise aus der EP 2 039 646 A1, eine verteilte Anordnung von einzelnen Batteriezellen, die in vorhandene Hohlräume und nicht ohne weiteres zugängliche freie Räume eines Flurförderzeugs montiert werden, um diesen Platz auszunutzen und den Platzbedarf eines Batteriefaches einzusparen. Dabei ist jedoch kein Wechsel der einzelnen Batteriezellen vorgesehen. In einer Ausführungsform können diese Batteriezellen Lithium-lonenbatteriezellen sein.

Der DE 100 12 162 A1 und der EP 2 261 167 A1 sind Batteriesysteme für Flurförderzeuge bekannt, die aus einer Mehrzahl von Einzelbatterien zusammengesetzt sind. Ebenso werden Anordnungen der Einzelbatterien in parallelem Anschluss und in Reihe angeschlossen offenbart.

Nachteilig an diesem Stand der Technik ist, dass dieser keine Lösung für ein Flurförderzeug mit einem seitlichen Batteriewechsel bietet, bei dem ein Batteriefach durch eine zwischen einer Vorderachse und eine Hinterachse angeordnete Öffnung in der Seite zugänglich ist. Auch wird keine Lösung für eine Nachrüstung und nachträgliche Benutzung von einer Mehrzahl von Einzelbatterien bei einem solchen Flurförderzeug durch diesen Stand der Technik geboten.

Die EP0620604 A2 offenbart eine Trägeranordnung für versiegelte Bleibatteriemodulen, die waagrecht angeordnet sind, wobei die Trägeranordnung in ein Batteriefach eines Flurförderzeugs einsetzbar ist.

Die EP 2 261 167 A1 offenbart ein Flurförderzeug, bei dem eine unterschiedliche Anzahl von Batteriemodulen in einer Batterieaufnahmeeinrichtung jeweils separat aufgenommen und elektrischen mit dem Flurförderzeug verbunden werden können.

Die EP 2 650 251 A1, welche unter Artikel 54(3) EPÜ fällt, zeigt eine waagerechte Anordnung von Batteriemodulen in einem Batteriefach, die seitlich zugänglich sind.

Der vorliegenden Erfindung liegt die Aufgabe zugrunde, ein Flurförderzeug sowie einen Adapterrahmen zur Bildung einer Traktionsbatterie aus Modulbatterien für ein Flurförderzeug mit seitlichen, horizontalen Batteriewechsel zur Verfügung zu stellen, die die zuvor genannten Nachteile vermeidet und die Nutzung von einer Mehrzahl von Modulbatterien ermöglicht.

Die Aufgabe wird durch einen Adapterrahmen zur Bildung einer elektrischen Traktionsbatterie eines Flurförderzeugs mit den Merkmalen des unabhängigen Patentanspruchs 1 sowie ein Flurförderzeug mit den Merkmalen des Patentanspruchs 12 gelöst. Vorteilhafte Weiterbildungen der Erfindung werden in den Unteransprüchen angegeben.

Die Aufgabe wird durch einen Adapterrahmen zur Bildung einer elektrischen Traktionsbatterie eines Flurförderzeugs aus mindestens zwei Modulbatterien gelöst, wobei die Modulbatterien in den Adapterrahmen eingesetzt werden können, der Adapterrahmen in einem Batteriefach eines Flurförderzeugs angeordnet werden kann und wobei das Batteriefach zwischen einer Vorderachse und einer Hinterachse des Flurförderzeugs angeordnet sowie für einen seitlichen, horizontalen Batteriewechsel über eine seitliche Batteriefachöffnung vorgesehen ist, und wobei sämtliche Modulbatterien über die Batteriefachöffnung bei in dem Batteriefach angeordneten Adapterrahmen eingesetzt oder entnommen werden können.

Vorteilhaft ist es dadurch möglich, die einzelnen Modulbatterien bei einem Austausch einer entladenen Traktionsbatterie zu tauschen. Da die Modulbatterien erheblich leichter sind, als eine herkömmliche Traktionsbatterie und in den Ausmaßen kleiner sind, werden für den Wechsel keine Vorrichtungen erforderlich bzw. nur leichte Hebezeuge, die leicht und kostengünstig zur Verfügung stehen. Durch die Erfindung ist es möglich, Modulbatterien über die seitliche Batteriefachöffnung bei einem Flurförderzeug, insbesondere Gabelstapler, mit seitlichem Batteriewechsel auszutauschen. Dabei können alle Modulbatterien auf diese Weise entnommen werden und ersetzt werden, wobei gegebenenfalls eine Reihenfolge einzuhalten ist, wenn eine Modulbatterie erst nach der Entnahme einer anderen zugänglich ist. Insbesondere bei Flurförderzeugen mit seitlichen Batteriewechsel handelt es sich jedoch um solche, die sehr große Traktionsbatterien aufweisen und bei denen im Regelfall ein zweites Flurförderzeug, beispielsweise ein Gabelhubwagen oder Gabelstapler erforderlich ist, um die Traktionsbatterie anzuheben und aus dem Batteriefach entnehmen zu können. Durch den erfindungsgemäßen Adapterrahmen ist dabei eine Nachrüstung bei bereits bestehenden Flurförderzeugen möglich. Dadurch wird es möglich, wenn neue Batterietypen genutzt werden, die erheblich leichter sind, wie beispielsweise Lithium-Ionenbatterien, bei einem herkömmlichen Gabelstapler bzw. Flurförderzeug mit seitlichen Batteriewechsel den Aufwand solcher zusätzlichen Flurförderzeuge allein für den Zweck eines Batteriewechsels zu vermeiden. Gleichzeitig können die neuartigen Typen von Batterien mit ihren Vorteilen wie höherer Leistungs- und Ladungsdichte eingesetzt werden.

Die Modulbatterien können jeweils einzelnen direkt austauschbar sein.

Dadurch wird es vorteilhaft möglich, jede Modulbatterie einzeln zu entnehmen, ohne dass beispielsweise zuvor eine andere Modulbatterie entnommen werden muss, um erst den Raum zu schaffen für die Entnahme der ersten Modulbatterie. Hier sind alle Modulbatterien so angeordnet, dass diese direkt entnommen und ausgetauscht werden können.

In einer günstigen Ausgestaltung der Erfindung erstrecken sich die Modulbatterien jeweils von der Batteriefachöffnung über die volle Tiefe des Batteriefachs und können einzeln aus dem Adapterrahmen herausgezogen werden.

Dabei können die Modulbatterien als senkrecht nebeneinander stehende Elemente ausgeführt sein. Diese lassen sich jeweils einzelnen aus dem Batteriefach bzw. Adapterrahmen heraus ziehen.

Vorteilhaft kann der Adapterrahmen eine Verriegelungsvorrichtung für jede Modulbatterie aufweisen.

Dadurch wird die Vielzahl der einzelnen Modulbatterien jeweils gesichert. Die Verriegelung kann dabei so ausgeführt sein, dass sie automatisch einrastet, wenn eine Modulbatterie vollständig eingeschoben wird.

Der Adapterrahmen kann einen festen Anschlussstecker für jede Modulbatterie aufweisen.

Mit derartigen, in den Adapterrahmen integrierten Anschlusssteckern für jede Modulbatterie, die bei korrektem Einsetzen der Modulbatterie automatisch mit einem Gegenstück kontaktieren, wird vorteilhaft bei einer Vielzahl von Modulbatterien vermieden, dass jeweils Steckverbindungen und Kabel verbunden werden müssen. Es ergibt sich eine Zeitersparnis und leichtere Bedienung. Dabei können die Anschlussstecker sowohl Anschlüsse für die Polanschlüsse der Modulbatterien, über die die Leistung abgeführt wird, umfassen, als auch Steuerungsanschlüsse wie beispielsweise Zuleitungen von und zu einer Batteriemanagementvorrichtung der einzelnen Modulbatterie.

Es können ein Teil oder alle der Modulbatterien elektrisch in Reihe geschaltet sein.

Dies entspricht der technisch einfachsten Variante, beispielsweise indem jede Modulbatterie die benötigte Kapazität aufweist, allerdings nur eine geringe Spannung. Beispielsweise kann eine 48V, 625Ah Batterie durch vier 12V Modulbatterien, alternativ durch acht 6V Modulbatterien mit jeweils 625 Ah zusammengesetzt werden. Vorteilhaft können bei einer elektrischen Schaltung in Reihe auch unterschiedlich stark geladene Modulbatterien eingesetzt werden, da sich diese nicht gegenseitig stören oder beeinflussen.

Es können ein Teil oder alle der Modulbatterien elektrisch parallel geschaltet sein.

Durch eine parallele Schaltung der Modulbatterien ergeben sich eine Reihe von Vorteilen. So können Modulbatterien mit definierter Spannung und Kapazität genutzt werden und die Anpassung für unterschiedliche Flurförderzeuge kann allein durch die Anzahl dieser Modulbatterien erfolgen. Dies ermöglicht es, mit einer beschränkten Anzahl von Typen von Modulbatterien zu arbeiten. Beispielsweise kann die zuvor beschriebene 48V, 625Ah durch fünf Modulbatterien mit 48V und 125 Ah zusammengestellt werden. Mit denselben Modulbatterien kann jedoch auch eine 500 Ah Batterie in demselben Flurförderzeug oder eine 750 Ah Batterie in einem anderen Flurförderzeug zusammengestellt werden. Dies ermöglicht eine größere Flexibilität in Bezug auf Kundenwünsche und die Möglichkeit, die Investitionskosten erheblich zu reduzieren, wenn bei einem Flurförderzeug mit nur seltenen und kurzen Benutzungszeiten die Kapazität der Traktionsbatterie durch eine verringerte Anzahl von Modulbatterien angepasst und kostengünstiger gestaltet wird.

In einer vorteilhaften Weiterbildung weist der Adapterrahmen eine gemeinsame Batteriesteuervorrichtung für alle Modulbatterien und/oder, soweit die Modulbatterien jeweils Batteriemanagementvorrichtungen aufweisen, für alle Batteriemanagementvorrichtungen der Modulbatterien auf.

Grundsätzlich ist es möglich, die bei moderneren Batterietypen, wie etwa Lithium-Ionenbatterien, erforderliche Steuerungseinheit zentral für alle Modulbatterien zusammenzufassen in einer Batteriesteuervorrichtung. Alternativ kann auch nur ein Teil der Funktionen zentral zusammengefasst werden in der Batteriesteuervorrichtung und die Modulbatterien können jeweils Batteriemanagementvorrichtungen aufweisen. Beispielsweise ist es auch möglich, nur bestimmte Betriebsdaten, wie zum Beispiel einen Ladezustand (SOC), Temperaturen, Ströme und Spannungen zu erfassen und diese über die Batteriesteuervorrichtung, die in den Adapterrahmen integriert ist, an ein Flurförderzeug weiter zu leiten. Vor allem ist es sinnvoll, wenn die Batteriesteuervorrichtung die Verbindungsleitungen und Daten aller Modulbatterien zusammenfasst und aus diesen einen einheitlichen Wert für die Traktionsbatterie bestimmt bzw. errechnet, der an das Flurförderzeug übermittelt wird. Dies kann beispielsweise ein Ladezustand (SOC) für die gesamte, aus den Modulbatterien gebildete Traktionsbatterie sein. Es können noch weitere Betriebsdaten der Modulbatterien ermittelt und gesammelt werden, genauso wie Daten über die Ströme, Spannungen, Temperaturen und eine Betriebsgeschichte der einzelnen Modulbatterien.

In einer Ausgestaltung der Erfindung kann die gemeinsame Batteriesteuervorrichtung abhängig von Spannungsdifferenzen zwischen den Modulbatterien einzelne Modulbatterien zu oder abschalten.

Bei einem unterschiedlichen Ladezustand der einzelnen Modulbatterien herrschen verschiedene Spannungen. Werden diese ohne weitere Maßnahmen parallel geschaltet, so kann es zu hohen Ausgleichströmen kommen. Dies kann vermieden werden, wenn bei zu hohen Spannungsdifferenzen einzelne Modulbatterien hinzu geschaltet oder abgeschaltet werden. Dabei können so lange Modulbatterien abgeschaltet werden, wie die verbleibenden oder auch im eventuell die einzige verbleibende Modulbatterie genügend Kapazität für den Betrieb des Flurförderzeugs aufweist.

Vorteilhaft weisen die Modulbatterien eine Batteriemanagementvorrichtung auf, die beim Auftreten von Spannungsdifferenzen zwischen den Modulbatterien die Spannung der jeweiligen Modulbatterie anpasst.

Die Batteriemanagementvorrichtung kann kostengünstig nach dem Stand der Technik zur Verfügung stehende Spannungswandler umfassen und durch eine entsprechende Regelung ermöglichen, dass eine Modulbatterien mit einem zu geringen Ladezustand dennoch noch in Betrieb gehalten werden kann.

Die Modulbatterien können Li-Ionen-Akkumulatoren oder Li-Polymer-Akkumulatoren oder Lithium-Titanat-Akkumulatoren oder Lithium-Eisen-Phosphat-Akkumulatoren oder Lithium-Luft-Akkumulatoren sein.

Die Aufgabe wird auch durch ein Flurförderzeug mit einer elektrischen Traktionsbatterie gelöst, die aus mindestens zwei Modulbatterien gebildet ist, wobei die Modulbatterien in einem Batteriefach des Flurförderzeugs angeordnet sind, das Batteriefach zwischen einer Vorderachse und eine Hinterachse des Flurförderzeugs angeordnet ist und für einen seitlichen, horizontalen Batteriewechsel über eine seitliche Batteriefachöffnung vorgesehen ist, wobei sämtliche Modulbatterien über die Batteriefachöffnung eingesetzt oder entnommen werden können. Vorteilhaft sind die Modulbatterien senkrecht nebeneinander stehend und jeweils einzelnen direkt austauschbar.

Vorteilhaft ist es dadurch möglich, die einzelnen Modulbatterien bei einem Austausch einer entladenen Traktionsbatterie zu tauschen. Da die Modulbatterien erheblich leichter sind, als eine herkömmliche Traktionsbatterie und in den Ausmaßen kleiner sind, werden für den Wechsel keine Vorrichtungen erforderlich bzw. nur leichte Hebezeuge, die leicht und kostengünstig zur Verfügung stehen. Durch die Erfindung ist es möglich, Modulbatterien über die seitliche Batteriefachöffnung bei einem Flurförderzeug, insbesondere Gabelstapler, mit seitlichem Batteriewechsel auszutauschen. Dabei können alle Modulbatterien auf diese Weise entnommen werden und ersetzt werden, wobei gegebenenfalls eine Reihenfolge einzuhalten ist, wenn eine Modulbatterie erst nach der Entnahme einer anderen zugänglich ist. Insbesondere bei Flurförderzeugen mit seitlichen Batteriewechsel handelt es sich jedoch um solche, die sehr große Traktionsbatterien aufweisen und bei denen im Regelfall ein zweites Flurförderzeug, beispielsweise ein Gabelhubwagen oder Gabelstapler erforderlich ist, um die Traktionsbatterie anzuheben und aus dem Batteriefach entnehmen zu können. Dadurch wird es möglich, wenn neue Batterietypen genutzt werden, die erheblich leichter sind, wie beispielsweise Lithium-Ionenbatterien, bei einem herkömmlichen Gabelstapler bzw. Flurförderzeug mit seitlichen Batteriewechsel den Aufwand solcher zusätzlichen Flurförderzeuge allein für den Batteriewechsel zu vermeiden. Gleichzeitig können die neuartigen Typen von Batterien mit ihren Vorteilen wie höherer Leistungs- und Ladungsdichte eingesetzt werden. Vorteilhaft wird es möglich, jede Modulbatterie einzeln zu entnehmen, ohne dass beispielsweise zuvor eine andere Modulbatterie entnommen werden muss, um erst den Raum zu schaffen für die Entnahme der ersten Modulbatterie. Hier sind alle Modulbatterien so angeordnet, dass diese direkt entnommen und ausgetauscht werden können.

In einer Weiterbildung der Erfindung erstrecken sich die Modulbatterien jeweils von der Batteriefachöffnung über die volle Tiefe des Batteriefachs und können einzeln herausgezogen werden.

Dabei können die Modulbatterien als senkrecht nebeneinander stehende Elemente ausgeführt sein. Diese lassen sich jeweils einzelnen aus dem Batteriefach bzw. Adapterrahmen heraus ziehen.

Vorteilhaft ist für jede Modulbatterie eine Verriegelungsvorrichtung vorgesehen.

Dadurch wird die Vielzahl der einzelnen Modulbatterien jeweils gesichert. Die Verriegelung kann dabei so ausgeführt sein, dass sie automatisch einrastet, wenn eine Modulbatterie vollständig eingeschoben wird.

In einer Ausgestaltung ist für jede Modulbatterie ein fester Anschlussstecker vorgesehen.

Mit derartigen, in dem Batteriefach integrierten Anschlusssteckern für jede Modulbatterie, die bei korrektem Einsetzen der Modulbatterie automatisch mit einem Gegenstück kontaktieren, wird vorteilhaft bei einer Vielzahl von Modulbatterien vermieden, dass jeweils Steckverbindungen und Kabel verbunden werden müssen. Es ergibt sich eine Zeitersparnis und leichtere Bedienung. Dabei können die Anschlussstecker sowohl Anschlüsse für die Polanschlüsse der Modulbatterien, über die die Leistung abgeführt wird, umfassen, als auch Steuerungsanschlüsse wie beispielsweise Zuleitungen von und zu einer Batteriemanagementvorrichtung der einzelnen Modulbatterie.

Es können ein Teil oder alle der Modulbatterien elektrisch in Reihe geschaltet sein.

Dies entspricht der technisch einfachsten Variante, beispielsweise indem jede Modulbatterie die benötigte Kapazität aufweist, allerdings nur eine geringe Spannung. Beispielsweise kann eine 48V, 625Ah Batterie durch vier 12V Modulbatterien, alternativ durch acht 6V Modulbatterien mit jeweils 625 Ah zusammengesetzt werden. Vorteilhaft können bei einer elektrischen Schaltung in Reihe auch unterschiedlich stark geladene Modulbatterien eingesetzt werden, da sich diese nicht gegenseitig stören oder beeinflussen.

Es können ein Teil oder alle der Modulbatterien elektrisch parallel geschaltet sein.

Durch eine parallele Schaltung der Modulbatterien ergeben sich eine Reihe von Vorteilen. So können Modulbatterien mit definierter Spannung und Kapazität genutzt werden und die Anpassung für unterschiedliche Flurförderzeuge kann allein durch die Anzahl dieser Modulbatterien erfolgen. Dies ermöglicht es, mit einer beschränkten Anzahl von Typen von Modulbatterien zu arbeiten. Beispielsweise kann die zuvor beschriebene 48V, 625Ah durch fünf Modulbatterien mit 48V und 125 Ah zusammengestellt werden. Mit denselben Modulbatterien kann jedoch auch eine 500 Ah Batterie in demselben Flurförderzeug zusammengestellt werden. Dies ermöglicht eine größere Flexibilität in Bezug auf Kundenwünsche und die Möglichkeit, die Investitionskosten erheblich zu reduzieren, wenn bei einem Flurförderzeug mit nur seltenen und kurzen Benutzungszeiten die Kapazität der Traktionsbatterie durch eine verringerte Anzahl von Modulbatterien angepasst und kostengünstiger gestaltet wird.

In einer vorteilhaften Weiterbildung ist für alle Modulbatterien und/oder, soweit die Modulbatterien jeweils Batteriemanagementvorrichtungen aufweisen, für alle Batteriemanagementvorrichtungen der Modulbatterien eine gemeinsame Batteriesteuervorrichtung vorgesehen.

Grundsätzlich ist es möglich, die bei moderneren Batterietypen, wie etwa Lithium-Ionenbatterien, erforderliche Steuerungseinheit zentral für alle Modulbatterien zusammenzufassen in einer Batteriesteuervorrichtung. Alternativ kann auch nur ein Teil der Funktionen zentral zusammengefasst werden in der Batteriesteuervorrichtung und die Modulbatterien können jeweils Batteriemanagementvorrichtungen aufweisen. Beispielsweise ist es auch möglich, nur bestimmte Betriebsdaten, wie zum Beispiel einen Ladezustand (SOC), Temperaturen, Ströme und Spannungen zu erfassen und diese in einer Batteriesteuervorrichtung zu verarbeiten, die in das Flurförderzeug integriert ist. Es können noch weitere Betriebsdaten der Modulbatterien ermittelt und gesammelt werden, genauso wie Daten über die Ströme, Spannungen, Temperaturen und eine Betriebsgeschichte der einzelnen Modulbatterien.

Die gemeinsame Batteriesteuervorrichtung kann abhängig von Spannungsdifferenzen zwischen den Modulbatterien einzelne Modulbatterien zu oder abschalten.

Bei einem unterschiedlichen Ladezustand der einzelnen Modulbatterien herrschen verschiedene Spannungen. Werden diese ohne weitere Maßnahmen parallel geschaltet, so kann es zu hohen Ausgleichströmen kommen. Dies kann vermieden werden, wenn bei zu hohen Spannungsdifferenzen einzelne Modulbatterien hinzu geschaltet oder abgeschaltet werden. Dabei können so lange Modulbatterien abgeschaltet werden, wie die verbleibenden oder auch im eventuell die einzige verbleibende Modulbatterie genügend Kapazität für den Betrieb des Flurförderzeugs aufweist.

In einer Weiterbildung der Erfindung können die Modulbatterien eine Batteriemanagementvorrichtung aufweisen, die beim Auftreten von Spannungsdifferenzen zwischen den Modulbatterien die Spannung der jeweiligen Modulbatterie anpasst.

Die Batteriemanagementvorrichtung kann kostengünstig nach dem Stand der Technik zur Verfügung stehende Spannungswandler umfassen und durch eine entsprechende Regelung ermöglichen, dass eine Modulbatterien mit einem zu geringen Ladezustand dennoch noch in Betrieb gehalten werden kann.

Die Modulbatterien können Li-Ionen-Akkumulatoren oder Li-Polymer-Akkumulatoren oder Lithium-Titanat-Akkumulatoren oder Lithium-Eisen-Phosphat-Akkumulatoren oder Lithium-Luft-Akkumulatoren sein.

Weitere Vorteile und Einzelheiten der Erfindung werden anhand der in den schematischen Figuren dargestellten Ausführungsbeispiele näher erläutert. Hierbei zeigt
- Fig.1: einen elektrisch angetriebenen Gabelstapler als Beispiel eines Flurförderzeugs mit einem Batteriefach,
- Fig. 2: schematisch einen erfindungsgemäßen Adapterrahmen mit Modulbatterien in einem Batteriefach und
- Fig. 3: schematisch das Batteriefach eines erfindungsgemäßen Flurförderzeugs mit Modulbatterien.

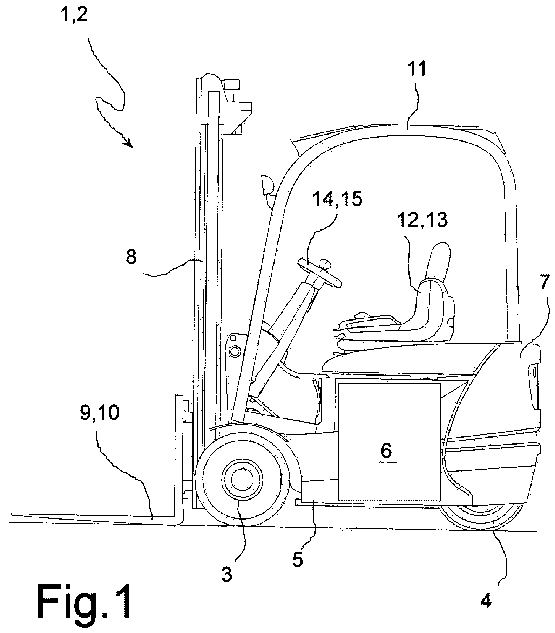

Die Fig.1 zeigt schematisch einen batterie-elektrisch angetriebenen Gabelstapler 1 als Beispiel eines Flurförderzeugs 2 mit einem Batteriefach. Eine Vorderachse 3 ist mit einer Hinterachse 4, die in dem vorliegenden Beispiel eines Dreiradstaplers nur aus einem Einzelrad besteht, durch einen Rahmen 5 verbunden. Zwischen der Vorderachse 3 und der Hinterachse 4 befindet sich ein Batteriefach 6, in das eine hier nicht dargestellte Traktionsbatterie des elektrisch angetrieben Gabelstaplers 1 eingesetzt werden kann und aus dem die Traktionsbatterie über eine seitliche Batteriefachöffnung des Flurförderzeugs 2 seitlich in horizontaler Richtung entnommen und ausgewechselt werden kann. Oberhalb der Hinterachse 4 ist ein Gegengewicht 7 angeordnet. An der Vorderachse 3 befindet sich ein Hubmast 8, an dem als Lastaufnahmevorrichtung 9 eine Lastgabel 10 höhenbeweglich geführt ist. Unter einem Fahrerschutzdach 11 ist ein Fahrerarbeitsplatz 12 mit einem Fahrersitz 13 angeordnet, von dem aus der Gabelstapler 1 über Bedienelemente 14, wie beispielsweise ein Lenkrad 15 gesteuert werden kann.

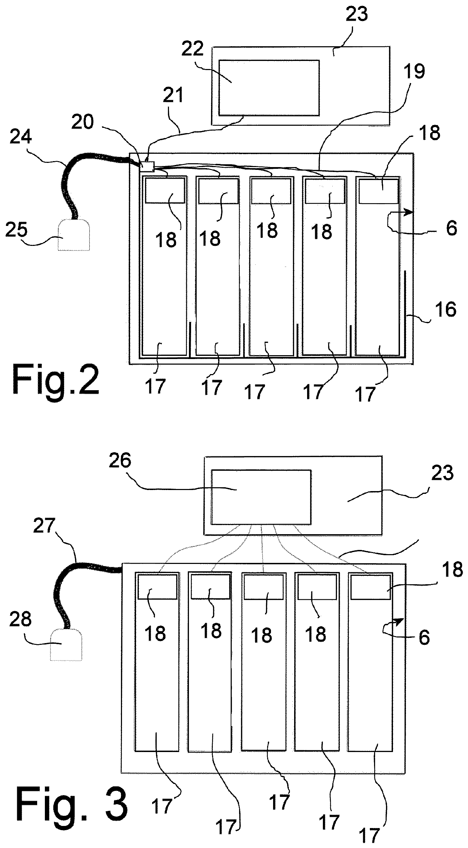

Die Fig. 2 zeigt schematisch einen erfindungsgemäßen Adapterrahmen 16 mit Modulbatterien 17 in dem Batteriefach 6 der Fig. 1. Jede Modulbatterie 17 weist eine Batteriemanagementvorrichtung 18 auf, die über Signalleitungen 19 mit einer Batteriesteuervorrichtung 20 der Adapterrahmen 16 verbunden ist. Die Batteriesteuervorrichtung 20 der Adapterrahmen 16 erzeugt aus den einzelnen Daten der Batteriemanagementvorrichtungen 18 entsprechende Werte für eine Traktionsbatterie insgesamt und leitet diese über eine Signalleitung 21 an eine Batteriesteuervorrichtung 22 als Teil der Elektronik 23 des Flurförderzeugs 1 weiter. Daneben ist noch ein Ladekabel 24 mit Ladestecker 25 symbolisch dargestellt, mit dem die Modulbatterien 17 geladen werden können, während sie sich in dem Adapterrahmen 16 und dem Flurförderzeug 1 befinden. Dabei kann die Batteriesteuervorrichtung 20 der Adapterrahmen 16 über das Ladekabel 24 die Modulbatterien 17 alle zusammen im eingesetzt Zustand laden.

Die Modulbatterien 17 befinden sich in Einschüben der Adapterrahmen 16, die nicht dargestellte integrierte Anschlussstecker und Verriegelungen aufweisen. Sobald eine Modulbatterie 17 in einen Einschub der Adapterrahmen 16 eingeschoben wird, verbindet sich automatisch der Anschlussstecker und rastet die Verriegelung ein. Dadurch ist eine schnelle und leichte Handhabung beim Wechseln der Modulbatterien 17 möglich. Der erfindungsgemäße Adapterrahmen 16 ermöglicht eine nachträgliche Nutzung moderner Batterietypen in Form einer modular aufgebaut Traktionsbatterie mit Modulbatterien 17 bei Flurförderzeugen 1 mit seitlichen Batteriewechsel.

Die Fig. 3 zeigt schematisch das Batteriefach 6 eines erfindungsgemäßen Flurförderzeugs 1 mit Modulbatterien 17. Jede Modulbatterie 17 weist eine Batteriemanagementvorrichtung 18 auf, die über Signalleitungen 19 mit einer Batteriesteuervorrichtung 26 in einer Fahrzeugelektronik 23 des Flurförderzeugs 1 verbunden ist. Die Batteriesteuervorrichtung 26 der Fahrzeugelektronik 23 verarbeitet die einzelnen Daten der Batteriemanagementvorrichtungen 18. Daneben ist noch ein Ladekabel 27 mit Ladestecker 28 symbolisch dargestellt, mit dem die Modulbatterien 17 geladen werden können, während sie sich in dem Batteriefach 6 des Flurförderzeugs 1 befinden.

Die Modulbatterien 17 befinden sich in nicht dargestellten Einschüben des Batteriefachs 6, die nicht dargestellte integrierte Anschlussstecker und Verriegelungen aufweisen. Sobald eine Modulbatterie 17 in einen Einschub des Batteriefachs 6 eingeschoben wird, verbindet sich automatisch der Anschlussstecker und rastet die Verriegelung ein. Dadurch ist eine schnelle und leichte Handhabung beim Wechseln der Modulbatterien 17 möglich.

Das erfindungsgemäße Flurförderzeug 1 ermöglicht eine Nutzung moderner Batterietypen in Form einer modular aufgebaut Traktionsbatterie mit Modulbatterien 17 in Verbindung mit einem seitlichen Batteriewechsel.

## Patentansprüche

1. Adapterrahmen zur Bildung einer elektrischen Traktionsbatterie eines Flurförderzeugs (1) aus mindestens zwei Modulbatterien (17), wobei die Modulbatterien (17) in den Adapterrahmen (16) eingesetzt werden können und der Adapterrahmen (16) in einem Batteriefach (6) eines Flurförderzeugs (1) angeordnet werden kann, wobei das Batteriefach (6) zwischen einer Vorderachse (3) und einer Hinterachse (4) des Flurförderzeugs (1) angeordnet ist sowie für einen seitlichen, horizontalen Batteriewechsel über eine seitliche Batteriefachöffnung vorgesehen ist, **dadurch gekennzeichnet, dass**
sämtliche Modulbatterien (17) über die Batteriefachöffnung bei in dem Batteriefach (6) angeordneten Adapterrahmen (16) eingesetzt oder entnommen werden können.

2. Adapterrahmen nach Anspruch 1,
**dadurch gekennzeichnet,**
**dass** die Modulbatterien (17) jeweils einzeln direkt austauschbar sind.

3. Adapterrahmen nach Anspruch 1 oder 2,
**dadurch gekennzeichnet,**
**dass** die Modulbatterien (17) jeweils von der Batteriefachöffnung sich über die volle Tiefe des Batteriefachs (6) erstrecken und einzeln aus dem Adapterrahmen (16) herausgezogen werden können.

4. Adapterrahmen nach einem der Ansprüche 1 bis 3,
**dadurch gekennzeichnet,**
**dass** der Adapterrahmen (16) eine Verriegelungsvorrichtung für jede Modulbatterie (17) aufweist.

5. Adapterrahmen nach einem der Ansprüche 1 bis 4,
**dadurch gekennzeichnet,**
**dass** der Adapterrahmen (16) einen festen Anschlussstecker für jede Modulbatterie (17) aufweist.

6. Adapterrahmen nach einem der Ansprüche 1 bis 5,
**dadurch gekennzeichnet,**
**dass** ein Teil oder alle der Modulbatterien (17) elektrisch in Reihe geschaltet sind.

7. Adapterrahmen nach einem der Ansprüche 1 bis 6,
**dadurch gekennzeichnet,**
**dass** ein Teil oder alle der Modulbatterien (17) elektrisch parallel geschaltet sind.

8. Adapterrahmen nach einem der Ansprüche 1 bis 7,
**dadurch gekennzeichnet,**
**dass** der Adapterrahmen (16) eine gemeinsame Batteriesteuervorrichtung (20) für alle Modulbatterien (17) und/oder, soweit die Modulbatterien (17) jeweils Batteriemanagementvorrichtungen aufweisen, für alle Batteriemanagementvorrichtungen (18) der Modulbatterien (17) aufweist.

9. Adapterrahmen nach Anspruch 7 und 8,
**dadurch gekennzeichnet,**
**dass** die gemeinsame Batteriesteuervorrichtung (20) abhängig von Spannungsdifferenzen zwischen den Modulbatterien (17) einzelne Modulbatterien (17) zu- oder abschalten kann.

10. Adapterrahmen nach einem der Ansprüche 1 bis 9,
**dadurch gekennzeichnet,**
**dass** die Modulbatterien (17) eine Batteriemanagementvorrichtung (18) aufweisen, die beim Auftreten von Spannungsdifferenzen zwischen den Modulbatterien (17) die Spannung der jeweiligen Modulbatterie (17) anpasst.

11. Adapterrahmen nach einem der Ansprüche 1 bis 10,
**dadurch gekennzeichnet,**
**dass** die Modulbatterien (17) Li-Ionen-Akkumulatoren oder Li-Polymer-Akkumulatoren oder Lithium-Titanat-Akkumulatoren oder Lithium-Eisen-Phosphat-Akkumulatoren oder Lithium-Luft-Akkumulatoren sind

12. Flurförderzeug mit einer elektrischen Traktionsbatterie die aus mindestens zwei Modulbatterien (17) gebildet ist, wobei die Modulbatterien (17) in einem Batteriefach (6) des Flurförderzeugs (1) angeordnet sind,das Batteriefach (6) zwischen einer Vorderachse (3) und einer Hinterachse (4) des Flurförderzeugs (1) angeordnet ist sowie für einen seitlichen, horizontalen Batteriewechsel über eine seitliche Batteriefachöffnung vorgesehen ist, und sämtliche Modulbatterien (17) über die Batteriefachöffnung eingesetzt oder entnommen werden können **dadurch gekennzeichnet,**
**dass** die Modulbatterien (17) senkrecht nebeneinander stehend und jeweils einzeln direkt austauschbar sind.

13. Flurförderzeug nach Anspruch 12,
**dadurch gekennzeichnet,**
**dass** die Modulbatterien (17) jeweils von der Batteriefachöffnung sich über die volle Tiefe des Batteriefachs (6) erstrecken und einzeln herausgezogen werden können.

14. Flurförderzeug nach Anspruch 12 oder 13,
**dadurch gekennzeichnet,**
**dass** für jede Modulbatterie (17) eine Verriegelungsvorrichtung vorgesehen ist.

15. Flurförderzeug nach einem der Ansprüche 12 bis 14,
**dadurch gekennzeichnet,**
**dass** für jede Modulbatterie (17) ein fester Anschlussstecker vorgesehen ist.

16. Flurförderzeug nach einem der Ansprüche 12 bis 15,
**dadurch gekennzeichnet,**
**dass** ein Teil oder alle der Modulbatterien (17) elektrisch in Reihe geschaltet sind.

17. Flurförderzeug nach einem der Ansprüche 12 bis 16,
**dadurch gekennzeichnet,**
**dass** ein Teil oder alle der Modulbatterien (17) elektrisch parallel geschaltet sind.

18. Flurförderzeug nach einem der Ansprüche 12 bis 17,
**dadurch gekennzeichnet,**
**dass** für alle Modulbatterien (17) und/oder, soweit die Modulbatterien (17) jeweils Batteriemanagementvorrichtungen aufweisen, für alle Batteriemanagementvorrichtungen (18) der Modulbatterien eine gemeinsame Batteriesteuervorrichtung (26) vorgesehen ist.

19. Flurförderzeug nach Anspruch 17 und 18,
**dadurch gekennzeichnet,**
**dass** die gemeinsame Batteriesteuervorrichtung (26) abhängig von Spannungsdifferenzen zwischen den Modulbatterien (17) einzelne Modulbatterien (17) zu- oder abschalten kann.

20. Flurförderzeug nach einem der Ansprüche 12 bis 19, **dadurch gekennzeichnet,**
**dass** die Modulbatterien (17) eine Batteriemanagementvorrichtung (18) aufweisen, die beim Auftreten von Spannungsdifferenzen zwischen den Modulbatterien (17) die Spannung der jeweiligen Modulbatterie (17) anpasst.

21. Flurförderzeug nach einem der Ansprüche 12 bis 20, **dadurch gekennzeichnet,**
**dass** die Modulbatterien (17) Li-Ionen-Akkumulatoren oder Li-Polymer-Akkumulatoren oder Lithium-Titanat-Akkumulatoren oder Lithium-Eisen-Phosphat-Akkumulatoren oder Lithium-Luft-Akkumulatoren sind.

## Claims

1. Adapter frame for forming an electrical traction battery of an industrial truck (1) comprising at least two module batteries (17), wherein the module batteries (17) can be inserted into the adapter frame (16) and the adapter frame (16) can be arranged in a battery compartment (6) of an industrial truck (1), wherein the battery compartment (6) is arranged between a front axle (3) and a rear axle (4) of the industrial truck (1) and is provided for lateral, horizontal battery exchange by means of a lateral battery compartment opening, **characterized in that** all of the module batteries (17) can be inserted or removed via the battery compartment opening when the adapter frame (16) is arranged in the battery compartment (6).

2. Adapter frame according to Claim 1, **characterized in that** the module batteries (17) are each individually directly replaceable.

3. Adapter frame according to Claim 1 or 2, **characterized in that** the module batteries (17) each extend from the battery compartment opening over the entire depth of the battery compartment (6) and can be individually withdrawn from the adapter frame (16).

4. Adapter frame according to one of Claims 1 to 3, **characterized in that** the adapter frame (16) has a locking apparatus for each module battery (17).

5. Adapter frame according to one of Claims 1 to 4, **characterized in that** the adapter frame (16) has a fixed connection plug for each module battery (17).

6. Adapter frame according to one of Claims 1 to 5, **characterized in that** some or all of the module batteries (17) are connected electrically in series.

7. Adapter frame according to one of Claims 1 to 6, **characterized in that** some or all of the module batteries (17) are connected electrically in parallel.

8. Adapter frame according to one of Claims 1 to 7, **characterized in that** the adapter frame (16) has a common battery control apparatus (20) for all of the module batteries (17) and/or, if the module batteries (17) each have battery management apparatuses, for all of the battery management apparatuses (18) of the module batteries (17).

9. Adapter frame according to Claims 7 and 8, **characterized in that** the common battery control apparatus (20) can connect or disconnect individual module batteries (17) depending on voltage differences between the module batteries (17).

10. Adapter frame according to one of Claims 1 to 9, **characterized in that** the module batteries (17) have a battery management apparatus (18) which adjusts the voltage of the respective module battery (17) when voltage differences between the module batteries (17) occur.

11. Adapter frame according to one of Claims 1 to 10, **characterized in that** the module batteries (17) are rechargeable lithium-ion batteries or rechargeable lithium-polymer batteries or rechargeable lithium-titanate batteries or rechargeable lithium-iron-phosphate batteries or rechargeable lithium-air batteries.

12. Industrial truck comprising an electrical traction battery which is formed from at least two module batteries (17), wherein the module batteries (17) are arranged in a battery compartment (6) of the industrial truck (1), the battery compartment (6) is arranged between a front axle (3) and a rear axle (4) of the industrial truck (1) and is provided for lateral, horizontal battery exchange by means of a lateral battery compartment opening, and all of the module batteries (17) can be inserted or removed via the battery compartment opening, **characterized in that** the module batteries (17) stand vertically next to one another and are each individually directly replaceable.

13. Industrial truck according to Claim 12, **characterized in that** the module batteries (17) each extend from the battery compartment opening over the entire depth of the battery compartment (6) and can be individually withdrawn.

14. Industrial truck according to Claim 12 or 13, **characterized in that** a locking apparatus is provided for each module battery (17).

15. Industrial truck according to one of Claims 12 to 14, **characterized in that** a fixed connection plug is provided for each module battery (17).

16. Industrial truck according to one of Claims 12 to 15, **characterized in that** some or all of the module batteries (17) are connected electrically in series.

17. Industrial truck according to one of Claims 12 to 16, **characterized in that** some or all of the module batteries (17) are connected electrically in parallel.

18. Industrial truck according to one of Claims 12 to 17, **characterized in that** a common battery control apparatus (26) is provided for all of the module batteries (17) and/or, if the module batteries (17) each have battery management apparatuses, for all of the battery management apparatuses (18) of the module batteries.

19. Industrial truck according to Claims 17 and 18, **characterized in that** the common battery control apparatus (26) can connect or disconnect individual module batteries (17) depending on voltage differences between the module batteries (17).

20. Industrial truck according to one of Claims 12 to 19, **characterized in that** the module batteries (17) have a battery management apparatus (18) which adjusts the voltage of the respective module battery (17) when voltage differences between the module batteries (17) occur.

21. Industrial truck according to one of Claims 12 to 20, **characterized in that** the module batteries (17) are rechargeable lithium-ion batteries or rechargeable lithium-polymer batteries or rechargeable lithium-titanate batteries or rechargeable lithium-iron-phosphate batteries or rechargeable lithium-air batteries.

## Revendications

1. Châssis adaptateur permettant de former une batterie de traction électrique d'un chariot de manutention (1) à partir d'au moins deux batteries modulaires (17), dans lequel les batteries modulaires (17) peuvent être insérées dans le châssis adaptateur (16) et le châssis adaptateur (16) peut être disposé dans un logement de batterie (6) d'un chariot de manutention (1),
dans lequel le logement de batterie (6) est disposé entre un essieu avant (3) et un essieu arrière (4) du chariot de manutention (1) et dans lequel il est également prévu une ouverture latérale de logement de batterie permettant d'effectuer latéralement et horizontalement un changement de batterie, **caractérisé en ce que** l'ensemble des batteries modulaires (17) peuvent être introduites ou retirées par l'intermédiaire de l'ouverture de logement de batterie lorsqu'un châssis adaptateur (16) est disposé dans le logement de batterie (6).

2. Châssis adaptateur selon la revendication 1, **caractérisé en ce que** les batteries modulaires (17) respectives peuvent être échangées directement.

3. Châssis adaptateur selon la revendication 1 ou 2,
**caractérisé en ce que** les batteries modulaires (17) s'étendent respectivement depuis l'ouverture de logement de batterie sur la totalité de la profondeur du logement de batterie (6) et **en ce qu'**elles peuvent être individuellement retirées du châssis adaptateur (16).

4. Châssis adaptateur selon l'une quelconque des revendications 1 à 3,
**caractérisé en ce que** le châssis adaptateur (16) comporte un dispositif de verrouillage pour chaque batterie modulaire (17).

5. Châssis adaptateur selon l'une quelconque des revendications 1 à 4,
**caractérisé en ce que** le châssis adaptateur (16) comporte un connecteur de raccordement fixe pour chaque batterie modulaire (17).

6. Châssis adaptateur selon l'une quelconque des revendications 1 à 5,
**caractérisé en ce qu'**une partie ou la totalité des batteries modulaires (16) sont connectées électriquement en série.

7. Châssis adaptateur selon l'une quelconque des revendications 1 à 6,
**caractérisé en ce qu'**une partie ou la totalité des batteries modulaires (17) sont connectées électriquement en parallèle.

8. Châssis adaptateur selon l'une quelconque des revendications 1 à 7,
**caractérisé en ce que** le châssis adaptateur (16) comporte un dispositif de commande de batterie commun (20) pour la totalité des batteries modulaires (17) et/ou, dans la mesure où les batteries modulaires (17) comportent chacune des dispositifs de gestion de batterie, pour la totalité des dispositifs de gestion de batterie (18) des batteries modulaires (17).

9. Châssis adaptateur selon les revendications 7 et 8,
**caractérisé en ce que** le dispositif de commande de batterie commun (20) peut mettre sous ou hors tension des batteries modulaires individuelles (17) en fonction de différences de tensions entre les batteries modulaires (17).

10. Châssis adaptateur selon l'une quelconque des revendications 1 à 9,
**caractérisé en ce que** les batteries modulaires (17) comportent un dispositif de gestion de batterie (18) qui adapte la tension de la batterie modulaire respective (17) lors de l'apparition de différences de tension entre les batteries modulaires (17).

11. Châssis adaptateur selon l'une quelconque des revendications 1 à 10,
**caractérisé en ce que** les batteries modulaires (17) sont des accumulateurs lithium-ion ou des accumulateurs lithium-polymère ou des accumulateurs lithium-titanate ou des accumulateurs lithium-fer-phosphate ou des accumulateurs lithium-air.

12. Chariot de manutention comportant une batterie de traction électrique qui est formée d'au moins deux batteries modulaires (17), dans lequel les batteries modulaires (17) sont disposées dans un logement de batterie (6) du chariot de manutention (1), le logement de batterie (6) est disposé entre un essieu avant (3) et un essieu arrière (4) du chariot de manutention (1) et il est en outre prévu une ouverture latérale de logement de batterie permettant d'effectuer latéralement et horizontalement un changement de batterie, et l'ensemble des batteries modulaires (17) peuvent être introduites ou retirées par l'intermédiaire de l'ouverture de logement de batterie, **caractérisé en ce que** les batteries modulaires (17) peuvent être échangées alors qu'elles sont verticales et côte à côte et de manière directe et individuelle.

13. Chariot de manutention selon la revendication 12,
**caractérisé en ce que** les batteries modulaires (17) s'étendent sur la totalité de la profondeur du logement de batterie (6) et peuvent être retirées individuellement.

14. Chariot de manutention selon la revendication 12 ou 13,
**caractérisé en ce qu'**il est prévu un dispositif de verrouillage pour chaque batterie modulaire (17).

15. Chariot de manutention selon l'une quelconque des revendications 12 à 14,
**caractérisé en ce qu'**il est prévu un connecteur de raccordement fixe pour chaque batterie modulaire (17).

16. Chariot de manutention selon l'une quelconque des revendications 12 à 15,
**caractérisé en ce qu'**une partie ou la totalité des batteries modulaires (17) sont connectées électriquement en série.

17. Chariot de manutention selon l'une quelconque des revendications 12 à 16,
**caractérisé en ce qu'**une partie ou la totalité des batteries modulaires (17) sont connectées électriquement en parallèle.

18. Chariot de manutention selon l'une quelconque des revendications 12 à 17,
**caractérisé en ce qu'**il est prévu un dispositif de commande de batterie commun (26) pour la totalité des batteries modulaires (17) et/ou, dans la mesure où les batteries modulaires (17) comportent chacune des dispositifs de gestion de batterie respectifs, pour la totalité des dispositifs de gestion de batterie (18) des batteries modulaires (17).

19. Chariot de manutention selon les revendications 17 et 18,
**caractérisé en ce que** le dispositif de commande de batterie commun (26) peut mettre sous ou hors tension des batteries modulaires individuelles (17) en fonction de différences de tensions entre les batteries modulaires (17).

20. Chariot de manutention selon l'une quelconque des revendications 12 à 19,
**caractérisé en ce que** les batteries modulaires (17) comportent un dispositif de gestion de batterie (18) qui adapte la tension de la batterie modulaire respective (17) lors de l'apparition de différences de tension entre les batteries modulaires (17).

21. Chariot de manutention selon l'une quelconque des revendications 12 à 20,
**caractérisé en ce que** les batteries modulaires (17) sont des accumulateurs lithium-ion ou des accumulateurs lithium-polymère ou des accumulateurs lithium-titanate ou des accumulateurs lithium-fer-phosphate ou des accumulateurs lithium-air.
